# EUROPÄISCHE PATENTSCHRIFT

(11) **EP 2 464 682 B1**
(45) Veröffentlichungstag und Bekanntmachung des Hinweises auf die Patenterteilung: **25.06.2014**
(21) Anmeldenummer: 10742755.1
(22) Anmeldetag: 04.08.2010
(51) Int. Cl.: C08J 5/18, C08L 27/06

(54) **FOLIE AUS VINYLCHLORIDPOLYMERISAT UND VERFAHREN ZU IHRER HERSTELLUNG**
VINYL CHLORIDE POLYMER FILM AND METHOD FOR PRODUCING SAME
FEUILLE DE POLYMÉRISAT DE CHLORURE DE VINYLE ET SON PROCÉDÉ DE PRODUCTION

(30) Priorität: 12.08.2009 DE 102009037253
(43) Veröffentlichungstag der Anmeldung: 20.06.2012
(73) Patentinhaber: Klöckner Pentaplast GmbH, 56412 Heiligenroth (DE)
(72) Erfinder: DEIRINGER, Günther, 84556 Kastl (DE); SCHMIDT, Bernd, 56412 Gackenbach (DE); JÜRGENS, Sascha, 65558 Eppenrod (DE)
(74) Vertreter: Plate, Jürgen
(86) Internationale Anmeldenummer: PCT/EP2010/004779
(87) Internationale Veröffentlichungsnummer: WO 2011/018182

(56) Entgegenhaltungen:
- EP-A1- 0 545 306
- WO-A1-2006/079363
- WO-A2-03/018686
- DE-A1-102005 003 776
- US-A- 3 686 361
- US-A- 4 206 291

## Beschreibung

Die Erfindung betrifft eine Folie und daraus thermogeformte Artikel, bestehend aus einer Mischung aus Vinylchloridpolymerisat, Polyester und Additiven sowie ein Verfahren zur Herstellung der Folie.

Der Begriff "Vinylchloridpolymerisat" - hier und im Folgenden mit "VCP" abgekürzt, bezeichnet Vinylchlorid-Homopolymerisate, Vinylchlorid-Copolymerisate sowie Mischungen der vorstehenden Polymerisate. Insbesondere umfasst der Begriff "VCP"
- durch Homopolymerisation von Vinylchlorid erzeugte Polyvinylchloride (PVC), und
- Vinylchlorid-Copolymerisate, die durch Polymerisation von Vinylchlorid mit einem oder mehreren Comonomeren, wie Ethylen, Propylen oder Vinaylacetat gebildet werden.

Der Begriff "Folie" umfasst hier und im Folgenden vereinzelte Stücke einer Folie sowie industriell hergestellte Folienbahnen mit Längen von mehreren Hundert bis zu einigen Tausend Metern.

Die erfindungsgemäße Folie wird durch Plastifizieren und anschließendes Extrudieren einer Vinylchloridpolymerisat, Polyester und Additive enthaltenden Mischung - im Folgenden als VCP-Mischung bezeichnet - durch eine Düse oder durch Kalandrieren hergestellt und kann inline und/oder offline weiterverarbeitet werden. Insbesondere eignet sich die Folie zum Thermoformen von Warenverpackungen mit komplexer Geometrie.

Im Stand der Technik sind Polyester- und VCP-Folien bekannt.

Das Patent EP 1 066 339 B1 der Eastman Chemical Company (Tennessee, USA) beschreibt ein Verfahren zur Herstellung einer Folie oder eines Blattes aus einer Polyesterharzzusammensetzung durch Kalandrieren. Die Polyesterkomponente des Harzes ist ein amorpher oder halbkristalliner Polyester, welcher aus dem geschmolzenem Zustand eine Kristallisationshalbwertzeit von mindestens 5 min aufweist. Die Polyesterkomponente bzw. der Polyester ist gewählt aus Polyestern, die aus (i) Disäurerestkomponenten und (ii) Diolrestkomponenten aufgebaut sind. Hierbei besteht der Polyester aus (i) mindestens 80 Mol-% einer Disäurerestkomponente gewählt aus Terephthalsäure, Naphthalindicarbonsäure, 1,4-Cyclohexandicarbonsäure, Isophthalsäure und Mischungen davon und (ii) 80 bis 100 Mol-% einer Diolrestkomponente, gewählt aus Diolen mit 2 bis 10 Kohlenstoffatomen und Mischungen davon und 0 bis 20 Mol-% eines modifizierenden Diols, gewählt aus 1,3-Propandiol, 1,4-Butandiol, 1,5-Pentandiol, 1,6-Hexandiol, 1,8-Octandiol, 2,24-Trimethyl-1,3-Pentandiol, Propylenglycol, 2,2,4,4-Tetramethyl-1,3-Cyclobutandiol enthält; wobei die Disäurerestkomponente auf 100 mol % Disäurerest basiert und der Diolrest auf 100 mol % Diolrest basiert. Im Weiteren umfasst die Harzzusammensetzung nach EP 1 066 339 B1 ein Additiv, welches ein internes Gleitmittel oder Antirutschmittel oder eine Mischung davon ist. Die Menge des zugesetzten Additivs liegt zwischen 0,01 bis 10 Gew.-% auf Basis des Gesamtgewichtes der Harzzusammensetzung. Amorphe oder halbkristalline Polyesterharzzusammensetzungen eignen sich gut für herkömmliche Kalandrierverfahren. Durch Kalandrieren derartiger Polyesterharzzusammensetzungen können gleichförmige Folien oder Blätter erzeugt werden. Die Polyesterharzzusammensetzungen werden beispielsweise unter dem Markennamen Cadence^{®} von Eastman Chemical Company vertrieben. Sie werden üblicherweise als Hauptkomponente für die Herstellung von Polyesterfolien eingesetzt, wobei ihr Anteil am Gesamtgewicht der Polyesterfolien in der Regel über 96 Gew.-%, beträgt.

VCP-Folien werden aus VCP-Zusammensetzungen bzw. -Mischungen hergestellt, die verschiedene Additive bzw. Modifikatoren enthalten, die den Folien ein bestimmtes Eigenschaftsprofil verleihen. Im Stand der Technik sind VCP-Mischungen bzw. VCP-Folien bekannt, die in erwärmtem Zustand verformbar sind und sich für eine Vielzahl von Anwendungen, beispielsweise als Verpackungs-, Schrumpf- und Hartfolien eignen. Um die Eigenschaften von VCP-Folien in gezielter Weise zu beeinflussen, werden Additive zur Erhöhung der Schlagzähigkeit und Wärmebeständigkeit, Prozesshilfsmittel zur Verbesserung der Verarbeitbarkeit und des Ausstoßes der Produktionsanlage, Gleitmittel zur Verbesserung des Gelierverhaltens während der Fertigung, Mattierungsmittel zur Reduzierung des Glanzes und insbesondere Fließhilfsmittel zur Verbesserung der Thermoformbarkeit und Verstreckbarkeit zugesetzt. Die Gewichtsanteile der einzelnen Additive liegen je nach Anforderung zwischen 0,1 bis über 40 Gew.-%. Zur Verbesserung der Fließfähigkeit, der Thermoformbarkeit und der Verstreckbarkeit von VCP-Mischungen werden bevorzugt Vinylchlorid-Copolymere eingesetzt in Mengen von mindestens 5 bis über 50 Gew.-%. Als weitere Additive werden Polymerisate aus Acrylnitril-Butadien-Styrol, Methylmethacrylat-Butadien-Styrol, Methylmethacrylat-Acrylnitril-Butadien-Styrol, Methylmethacrylat und chloriertes Polyethylen, Polymethylmethacrylat und Ethylen-Vinylacetat als Schlagzähkomponenten in einer Menge von 1 bis 20 Gew.-%, bezogen auf das Gewicht der VCP-Folie, eingesetzt. In VCP-Mischungen für Folien werden übliche Gleitmittel eingesetzt, wie Fettsäuren, Fettalkohole, Fettsäureamide, Metallseifen, Ester von Fettsäuren mit ein- oder mehrwertigen Alkoholen, Ester von Dicarbonsäuren mit ein- oder mehrwertigen Alkoholen, Ester von Fettsäuren und Dicarbonsäuren mit mehrwertigen Alkoholen, sogenannte Mischester oder Komplexester, Ester von Phthalsäure mit ein- oder mehrwertigen Alkoholen oder natürliche oder synthetische Wachse. Die Menge an Gleitmitteln beträgt 0,1 bis 2 Gew.-%, bezogen auf das Gesamtgewicht der VCP-Mischung. Bekannte Wärmestabilisatoren sind organische Zinnstabilisatoren, insbesondere Zinncarboxylate, Zinnmercaptide und Zinnthioglykolate. Des Weiteren sind Metall-Stabilisatoren auf Basis von Calcium, Zink, und sonstige metallfreie organische Stabilisatoren und anorganische Stabilisatoren wie beispielsweise Chlorfänger auf Basis von Dihydrotalcit einsetzbar. Der Anteil an Wärmestabilisatoren beträgt in der Regel 0,3 bis 5 Gew.-%, bezogen auf das Gesamtgewicht der VCP-Mischung. Die EP 0 545 306 A1 offenbart ein Beispiel einer PVC-Folie gemäß dem Stand der Technik.

Der Einsatz von Vinylchlorid-Copolymeren als Fließhilfsmittel zur Verbesserung der Thermoformbarkeit und Verstreckbarkeit von PVC- bzw. VCP-Folien vermindert allerdings die thermische Stabilität, erhöht die Klebeneigung der plastifizierten VCP-Mischung und vermindert den Wärmestand der daraus hergestellten Folien. Diese nachteiligen Effekte sind bekannt und werden mittels komplexer Additivrezepturen, die in der Fertigung mit einem erheblichen logistischen Aufwand verbunden sind, kompensiert.

Die Aufgabe der vorliegenden Erfindung besteht darin, eine VCP-Folie bereitzustellen, die eine gute Thermoformbarkeit aufweist und mit einfachen Additivrezepten in industriellem Maßstab herstellbar ist.

Diese Aufgabe wird gelöst durch eine Folie aus einer VCP-Mischung, umfassend 70 bis 97 Gew.-% eines oder mehrerer Vinylchloridpolymerisate mit K-Werten von 50 bis 90; 2 bis 25 Gew.-% Additive aus der Gruppe, umfassend Modifikatoren, hochmolekulare Polymere, Stabilisatoren, Wachse, Antiblockmittel, Farbmittel, Weichmacher, Prozesshilfsmittel und 0,1 bis kleiner 5 Gew.-% eines halbkristallinen oder amorphen Polyesters mit einer Kristallisationshalbwertzeit im geschmolzenen Zustand von mindestens 5 Minuten, wobei die Gewichtsanteile auf das Gesamtgewicht der VCP-Mischung bezogen sind.

Bevorzugte Ausführungsformen der Erfindung sind dadurch gekennzeichnet, dass die Folie:
- in unverstrecktem Zustand eine Dicke von 30 µm bis 1200 µm aufweist;
- in verstrecktem Zustand mit einem Streckgrad von 1,3 bis 4,0 eine Dicke von 20 µm bis 800 µm hat;
- einen Streckgrad zwischen 2 und 3 aufweist;
- ihre Dicke in verstrecktem Zustand 20 bis 200 µm beträgt;
- bei einer Temperatur von 100 °C einen Kantenradius im Bereich von 0,5 bis 4,0 mm hat;
- bei einer Temperatur von 100 °C einen Kantenradius im Bereich von 1,4 bis 1,8 mm hat;
- die Maßänderung der verstreckten Folie durch Schrumpfen bei einer Temperatur von 75 °C in Streckrichtung 20 bis 70 % beträgt;
- die Maßänderung der verstreckten Folie durch Schrumpfen bei einer Temperatur von 95 °C in Streckrichtung 35 bis 80 % beträgt; und
- sie regenerierten, amorphen oder halbkristallinen Polyester enthält.

Zur Herstellung von VCP-Folien wird im Stand der Technik als Fließhilfsmittel üblicherweise Vinylchlorid/Vinylacetat Copolymer in einer Menge von mindestens 5 bis zu über 50 Gew.-% eingesetzt. Die Erfinder der vorliegenden Anmeldung haben nun bei Versuchen festgestellt, dass sich amorphe oder halbkristalline Polyester ebenfalls als Fließhilfsmittel für VCP-Folien eignen und schon mit einer geringen Menge von kleiner 5 Gew.-% eines derartigen Polyesters eine gute Thermoformbarkeit erzielbar ist, die messbar besser ist als die Thermoformbarkeit von Folien ohne diesen Zusatz. Überraschend wurde gefunden, dass durch Zugabe eines amorphen oder halbkristallinen Polyesters eine Thermoformbarkeit erhalten wird, die der Thermoformbarkeit einer VCP-Folie entspricht, welche anstelle des Polyesters einen 2- bis 3-fachen Gewichtsanteil an Vinylchlorid/Vinylacetat Copolymer enthält.

Die Erfindung stellt somit eine VCP-Folie mit guter Thermoformbarkeit zur Verfügung, die kein Vinylchlorid/Vinylacetat Copolymer oder einen verminderten Anteil dieses Additivs enthält. Insbesondere wird eine PVC-Folie geschaffen, die gänzlich frei von Vinylchlorid/Vinylacetat Copolymer ist und sich für die Erzeugung von thermogeformten Verpackungen in industriellem Maßstab eignet.

Die Verstreckung von Folien erfolgt bei Temperaturen und Streckgraden, die denen beim Thermoformen ähneln. Dementsprechend weist die erfindungsgemäße Folie auch eine gute Verstreckbarkeit auf.

Als Polyesterzusatz für die erfindungsgemäßen VCP-Folien werden handelsübliche amorphe, nicht kristallisierbare Polyester, wie Cadence^{®} oder Embrace^{®} von Eastman Chemical Company, verwendet. Solche Polyester zeichnen sich dadurch aus, dass sie in geschmolzenem Zustand eine Kristallisationshalbwertzeit von mindestens 5 min aufweisen. Insbesondere sind diese Polyester aus (i) Disäurerestkomponenten und (ii) Diolrestkomponenten der folgenden Zusammensetzung aufgebaut:
(i) mindestens 80 Mol-% einer Disäurerestkomponente gewählt aus Terephthalsäure, Naphthalindicarbonsäure, 1,4-Cyclohexandicarbonsäure, Isophthalsäure und Mischungen davon, und
(ii) 80 bis 100 Mol-% einer Diolrestkomponente, gewählt aus Diolen mit 2 bis 10 Kohlenstoffatomen und Mischungen davon und 0 bis 20 Mol-% eines modifizierenden Diols, gewählt aus 1,3-Propandiol, 1,4-Butandiol, 1,5-Pentandiol, 1,6-Hexandiol, 1,8-Octandiol, 2,24-Trimethyl-1,3-Pentandiol, Propylenglycol, 2,2,4,4-Tetramethyl-1,3-Cyclobutandiol enthält; wobei die Disäurerestkomponente auf 100 Mol-% Disäurerest basiert und der Diolrest auf 100 Mol-% Diolrest basiert.

Der amorphe oder halbkristalline Polyester wird der VCP-Mischung in Pulver-, Pellet- oder Granulatform zugegeben.

Erfindungsgemäß kann ferner auch ein amorpher oder halbkristalliner Polyester in Form von aufbereitetem Mahlgut verwendet werden. Aufbereitetes Mahlgut wird aus Rücklaufmaterial (Rezyklat) gewonnen, das bei der Herstellung von Polyesterfolien anfällt, die einen hohen Anteil von über 80 Gew.-% eines amorphen oder halbkristallinen Polyesters enthalten. Dabei kann grobes Mahlgut mit einer Korngröße größer 3 mm und/oder Feinmahlgut mit einer Korngröße kleiner 3 mm, rekompaktiertes Mahlgut (beispielsweise nach dem Condux^{®} - Verfahren) sowie regranuliertes Mahlgut verwendet werden. Regranuliertes Mahlgut wird durch ein Verfahren erhalten, bei dem plastifiziertes Rücklaufmaterial durch einen Filter gepresst, eine Lochblende extrudiert und zu Granulat abgeschlagen wird. Das vorstehende Aufbereitungsverfahren bewirkt einen leichten Abbau des amorphen oder halbkristallinen Polyesters, der anhand der intrinsischen Viskosität (IV) messbar ist. Der Abbau des Polyesters kann in besonderen Fällen das Gelieren der VCP-Mischung fördern und die optische Qualität der Folie verbessern.

Die Messung der Kristallisations-Halbwertszeit von Polyester ist in der EP 0 1 066 339 B1 (Anspruch 1 und Seite 3, Zeile 1-22) beschrieben. Demnach wird die Kristallisations-Halbwertszeit mithilfe eines Digital Scanning Calorimeters (DSC) bestimmt. DSC ist eine Standardmethode für die Messung der thermischen Eigenschaften, insbesondere der Phasenübergangstemperaturen von Festkörpern. Für die Ermittlung der Kristallisationshalbwerstzeit wurden im Rahmen der vorliegenden Erfindung 15,0 mg des zu messenden Polyesters auf 290 °C erwärmt, hieran anschließend in Gegenwart von Helium mit einer Rate von 320 °C pro Minute gekühlt und die Zeitspanne bis zum Erreichen der isothermen Kristallisationstemperatur bzw. des Kristallisationspeaks der DSC-Kurve detektiert. Anhand des zeitabhängigen Verlaufs der Kristallisation wird die Kristallisationshalbwertszeit bestimmt. Die Kristallisationshalbwertszeit entspricht der Zeit, die bei der gegebenen Temperatur nach der Initialphase der Kristallisation benötigt wird, um in der Probe 50 % der maximal erreichbaren Kristallinität zu erhalten.

Die Additive der VCP-Mischung sind gewählt aus der Gruppe, umfassend Modfikatoren, bevorzugt hochmolekulare Polymere, Stabilisatoren, Wachse, Antiblockmittel, Farbmittel, Weichmacher, Prozesshilfsmittel.

Soweit die erfindungsgemäße Folie Vinylchlorid-Copolymere umfasst, enthält das Copolymer als Comonomer vorzugsweise Ethylen, Propylen oder Vinylacetat mit einem Anteil von 1 bis 45 Gew.-%, bezogen auf das Gewicht des Vinylchlorid-Copolymers.

Erfindungsgemäße Folien werden in der Weise erhalten, dass die plastifizierte VCP-Mischung zu einer unverstreckten Folie mit einer Dicke von 50 bis 1000 µm extrudiert bzw. kalandriert wird. Die hierdurch erhaltene Folie kann als solche direkt verwendet werden oder in einem unmittelbar nachfolgenden Verfahrensschritt (inline und/oder offline) thermogeformt oder verstreckt werden.

Die VCP-Mischung enthält in einer Ausführungsform 70 bis 87 Gew.-% Polyvinylchlorid, bezogen auf das Gesamtgewicht der VCP-Mischung, mit einem K-Wert von 60. Als Modifikator für die Schlagzugzähigkeit wird ein Methylmethacrylat-Butadien-Styrol-Copolymerisat von beispielsweise 5 bis 10 Gew.-%, bezogen auf die VCP-Mischung, eingesetzt. Die erfindungsgemäße VCP-Mischung enthält eine geringe Menge an Verarbeitungshilfe, beispielsweise ein Methylmethacrylat-Acrylatester-Styrol-Copolymerisat von 0,5 bis 2 Gew.-%, bezogen auf die VCP-Mischung, insbesondere von 1 Gew.-%. Des Weiteren ist als Wärmestabilisator ein Organo-Zinn-Schwefel-Stabilisator wie Dioctylzinn-bis-(Thioglykolsäure-2-Ethyl-1-Hexyl)-ester mit mehr als 70 % und Monooctylzinntris-(Thioglykolsäure-2-Ethyl-1-Hexyl)-ester mit weniger als 30 Gew.-%, jeweils bezogen auf die Menge des Stabilisators, vorgesehen. Der Anteil des Stabilisators an der VCP-Mischung beträgt 1 bis 2 Gew.-%, insbesondere 1,5 Gew.-%.

Als Gleitmittel werden vorzugsweise Mischungen von Komplex- und Glycerinestem sowie gesättigte, unverzweigte aliphatische Monocarbonsäuren wie Palmitin- und Stearinsäure eingesetzt. Die wirksame Menge an Gleitmittel beträgt üblicher Weise 0,1 bis 2,5 Gew.-%, insbesondere 0,3 bis 1,5 Gew.-%, bezogen auf das Gesamtgewicht der VCP-Mischung. Der zweite wesentliche Bestandteil der erfindungsgemäßen VCP-Mischung ist ein halbkristalliner oder amorpher Polyester, der in einer Menge von 0,1 bis < 5 Gew.-%, bezogen auf die VCP-Mischung, eingesetzt wird. Bei diesem Polyester handelt es sich um ein marktübliches Produkt der Eastman Chemical Company, wie es in dem europäischen Patent EP 1 066 339 B1 beschrieben ist. Dieser Polyester ist teilweise oder vollständig an Stelle des üblichen Copolymeren aus Vinylchlorid und Vinylacetat Bestandteil der erfindungsgemäßen VCP-Mischung. Als Antiblockmittel wird üblicher Weise noch Kaolin oder Kreide in einer Menge von 0,1 bis 0,5 Gew.-%, insbesondere von 0,2 Gew.-%, bezogen auf die Menge der VCP-Mischung, zugesetzt.

Die VCP-Mischung kann selbstverständlich auch mit Hilfe entsprechender Farbmittel bzw. Farbstoffe eingefärbt werden, wobei die Einfärbung auf weiß vorzugsweise mit Titandioxid und/oder Kreide vorgenommen wird. Als Flammschutzmittel kann noch Antimontrioxid und als bevorzugtes Antistatikmittel quaternäres Ammoniumsalz zugesetzt werden. Ebenso können übliche Prozesshilfsmittel zugegeben werden. Die Aufbereitung der VCP-Mischung, von der bei der Herstellung der erfindungsgemäßen Folien ausgegangen wird, erfolgt durch Mischen eines pulver-, pellet- oder granulatförmigen Vinylchloridpolymerisats oder Polyvinylchlorids mit 70 bis 97 Gew.-% und einem K-Wert von 50 bis 90 mit Additiven, deren Anteil 2 bis 25 Gew.-%, jeweils bezogen auf das Gesamtgewicht der VCP-Mischung, beträgt, durch Hinzufügen eines halbkristallinen oder amorphen Polyesters in Pulver-, Pellet- oder Granulatform, mit einem Anteil von 0,1 bis < 5 Gew.-% der VCP-Mischung. Die VCP-Mischung wird plastifiziert, aufgeschmolzen und beim Kalandrieren zu einer Folie, die durch Hindurchführen durch einen Druckspalt zweier Kalandrierwalzen eines Walzenkalanders, bei Temperaturen von 150 bis 250 °C der Kalandrierwalzen ausgewalzt. Dabei wird das für Vinylchloridpolymerisat bekannte Rollknet-Kalandrierverfahren angewandt. Vor den Walzen des 4- bis 6-Walzenkalanders, der im Allgemeinen hochglatte, hartverchromte Walzen umfasst, bildet sich vor jedem Walzenspalt ein rotierender Knetkörper aus, der als Rollknet bezeichnet wird. Die kalandrierte Folie wird von der letzten Kalanderwalze abgezogen und mittels Kühlwalzen gekühlt und aufgewickelt. Nachfolgend kann in einem inline und/oder offline Verfahrensschritt noch z. B. ein Thermoform- oder ein Streckprozess in Längs- und/oder Querrichtung mit einem Streckgrad von 1,3 bis 7 erfolgen. Die Folie wird dabei dünner und erhält ein Schrumpfvermögen (hohe Maßänderungswerte in Streckrichtung).

Die Folie hat im Allgemeinen eine Dicke von 100 bis 1000 µm und wird bei Bedarf mit einem Streckgrad von 1,3 bis 7 auf Dickenwerte von z.B. 20 bis 250 µm Dicke gestreckt. Der Streckgrad ist der Quotient aus der Foliendicke vor dem Verstrecken und der Foliendicke nach dem Streckvorgang und beträgt bevorzugt 3 bis 4. Somit werden Folien in einer Dicke von 20 bis 250 µm und bevorzugt von 35 bis 200 µm Dicke erhalten.

Im Weiteren hat die Erfindung die Aufgabe, ein Verfahren zur Herstellung einer thermoformbaren Folie zu schaffen.

Diese Aufgabe wird gelöst durch ein Verfahren, umfassend die Schritte:
(a) Mischen eines oder mehrerer pulver-, pellet- oder granulatförmiger Vinylchloridpolymerisate mit einem K-Wert von 50 bis 90 und einem Anteil von 70 bis 97 Gew.-% mit Additiven aus der Gruppe, umfassend Modfikatoren, hochmolekulare Polymere, Stabilisatoren, Wachse, Antiblockmittel, Farbmittel, Weichmacher, Prozesshilfsmittel, mit einem Anteil von 2 bis 25 Gew.-% und einem halbkristallinen oder amorphen Polyester in Pulver-, Pellet- oder Granulatform mit einer Kristallisationshalbwertzeit im geschmolzenen Zustand von mindestens 5 min, mit einem Anteil von 0,1 bis kleiner 5 Gew.-%, wobei die Gewichtsanteile auf das Gesamtgewicht der gemischten Komponenten bezogen sind;
(b) Plastifizieren und Aufschmelzen der in Schritt (a) erhaltenen VCP-Mischung;
(c) Kalandrieren oder Extrudieren der aufgeschmolzenen VCP-Mischung bei Temperaturen von 150 bis 250 °C, um eine Folie zu formen; und
(d) Verstrecken und/oder Thermoformen der Folie in einem inline und/oder offline Prozess, wobei beim Verstrecken der Streckgrad zwischen 1,3 bis 4, insbesondere zwischen 2 bis 3 in Längs- und/oder Querrichtung beträgt.

Zweckmäßige Ausgestaltungen des erfindungsgemäßen Verfahrens zeichnen sich dadurch aus, dass:
- die mittlere Temperatur der Folie beim Verstrecken 70 bis 120 °C, insbesondere 100 °C beträgt;
- die mittlere Temperatur der Folie beim Thermoformen 80 bis 150 °C, insbesondere 100 °C beträgt;
- die VCP-Mischung in einem Gelieraggregat, auf einem Mischwalzwerk oder in einem Extruder auf etwa 130 bis 190 °C vorgeliert wird, um anschließend durch Kalandrieren zu der Folie geformt zu werden;
- 70 bis 87 Gew.-% eines pulverförmigen Vinylchloridpolymerisats mit einem K-Wert von 50 bis 70; 0,1 bis kleiner 5 Gew.-% eines halbkristallinen oder amorphen Polyesters mit einer Kristallisationshalbwertszeit im geschmolzenen Zustand von mindestens 5 min in Pulver-, Pellet- oder Granulatform und 5 bis 25 Gew.-% Additive miteinander gemischt werden, wobei die Gewichtsanteile auf das Gesamtgewicht der erhaltenen VCP-Mischung bezogen sind, dass die VCP-Mischung plastifiziert und aufgeschmolzen und die aufgeschmolzene VCP-Mischung zu einer Folie kalandriert oder extrudiert wird; und
- für die VCP-Mischung ein Vinylchlorid-Copolymer eingesetzt wird, das als Comonomer Ethylen, Propylen oder Vinylacetat mit einem Anteil von 1 bis 45 Gew.-% des Vinylchlorid-Copolymeren enthält.

Die erfindungsgemäße Folie wird als Verpackungs-, Schrumpf-, Möbel-, Deckenkassetten-, Kartenfolien als beschreib- und bedruckbare Folie verwendet. Da die Folie thermoformbar und/oder verstreckbar ist, findet sie vor allem als Verpackungs- und Schrumpffolie Anwendung.

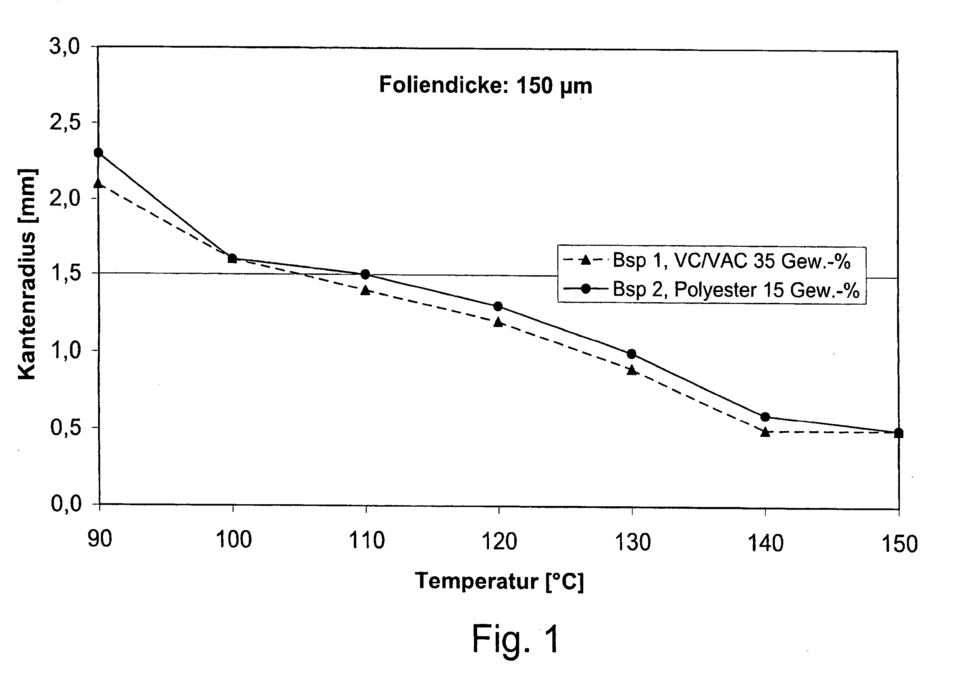

Die Erfindung wird im Folgenden anhand von Folienbeispielen und den Figuren 1 bis 4 näher erläutert.

Die in den nachstehenden Tabellen 1 und 2 angeführten Folienbeispiele umfassen die Vergleichsbeispiele 1, 2, 3, 4, 6 und 7 sowie die erfindungsgemäßen Beispiele 5 und 8. In Tabelle 1 sind die Rezepturen sowie die Rohstoffe mit Bezugsquelle und in Tabelle 2 die quantitative Zusammensetzung der Folien, ihre Dicke und die beim Thermoformen im Temperaturbereich von 90 bis 150 °C erhaltenen Kantenradien für die Vergleichsbeispiele 1, 2, 3, 4, 6 und 7 und die erfindungsgemäßen Beispiele 5 und 8 zusammengestellt.

Die Vergleichsbeispiele 1, 4 und 7 betreffen VCP-Folien, die als Hauptkomponente PVC, als wesentliche Zusatzkomponente ein Vinylchlorid-Vinylactat-Copolymer (VC/VAC-Copolymer) sowie verschiedene Additive enthalten. Die Folie des Beispiels 3 hat eine ähnliche Zusammensetzung, enthält jedoch kein Vinylchlorid-Vinylactat-Copolymer. Sie wird daher im Folgenden auch als Referenz bezeichnet. Die Dicken der Vergleichsfolien betragen 150, 300 und 550 µm.

Die erfindungsgemäßen Folien der Beispiele 5 und 8 enthalten anstelle von VC/VAC-Copolymer einen amorphen oder halbkristallinen Polyester, wobei der Gewichtsanteil des Polyesters geringer ist als der des VC/VAC-Copolymers der Vergleichsbeispiele. Bei dem amorphen oder halbkristallinen Polyester handelt es sich um einen Polyester gemäß dem europäischen Patent EP 0 1 066 339 B1 der Eastman Chemical Company.

Als Parameter für die Thermoformbarkeit dient der Krümmungsradius einer Kante, die in der Folie mittels Thermoformen erzeugt wird. Hierbei wird als Formwerkzeug ein zylindrischer Becher aus Metall verwendet, dessen bodenseitige Kante rechtwinklig ausgebildet ist, d.h. dass die Bodenkante des Formbechers einen Krümmungsradius von "Null" aufweist. Der Formbecher ist als Negativform, d.h. als zylindrische Vertiefung ausgeführt.

Je besser die Thermoformbarkeit der Folie ist, desto besser fügt sie sich an das Profil des Formbechers an und umso kleiner ist der Krümmungsradius der in der Folie abgeformten Bodenkante. Die Thermoformbarkeit bzw. das Fließverhalten einer Folie ist temperaturabhängig. Im Allgemeinen wird eine Folie bei zunehmender Temperatur fließfähiger und ist somit besser thermoformbar. Um diesem Verhalten Rechnung zu tragen und die Thermoformbarkeit möglichst umfassend zu charakterisieren wird die Thermoformbarkeit bei mehreren vorgegebenen Temperaturwerten gemessen. Damit kann das Verhalten beim Thermoformen über einen größeren Verarbeitungsbereich ermittelt werden. Der Abstand der Temperaturwerte für die Messung der Thermoformbarkeit beträgt typischerweise 5 oder 10° C.

Im Weiteren ist zu beachten, dass die Foliendicke den Krümmungsradius der abgeformten Kante beeinflusst. Mit zunehmender Foliendicke wird der Krümmungsradius größer. Gemäß einer werksinternen Vorschrift wird eine Folienprobe mit einer Fläche von 100 mm x 100 mm aus der zu prüfenden Folie entnommen. Die Folienprobe wird auf eine Negativform mit dem vorstehend beschriebenen zylindrischen Formbecher gelegt. Der Formbecher hat einen Durchmesser von 50 mm und eine Tiefe von 25 mm. Der Übergang von der Wand zum Boden ist rechtwinklig (Krümmungsradius Null). Mittels eines Dichtringes werden der Formbecher und die aufgelegte Folienprobe randseitig vakuumdicht gegen die Umgebung abgeschlossen.

Die Folienprobe wird mit einem IR-Strahler auf eine vorgegebene Temperatur aufgeheizt. Hierbei wird die Folientemperatur mit einem Strahlungspyrometer gemessen und die Bestrahlungsleistung des IR-Strahlers automatisch geregelt, um die vorgegebene Temperatur einzustellen, ohne dass die Temperatur der Folie beim Aufheizen den Sollwert übersteigt (kein Überschiessen). Sobald die vorgegebene Temperatur erreicht ist, wird an die Negativform ein vorgegebener Unterdruck relativ zum Druck der Umgebungsluft angelegt, wobei die Folie innerhalb von weniger als 1 sec in die Negativform gepresst wird. Der angelegte Unterdruck beträgt zwischen 0,08 und 0,12 bar, d.h. etwa 8 bis 12 % des Umgebungsdruckes.

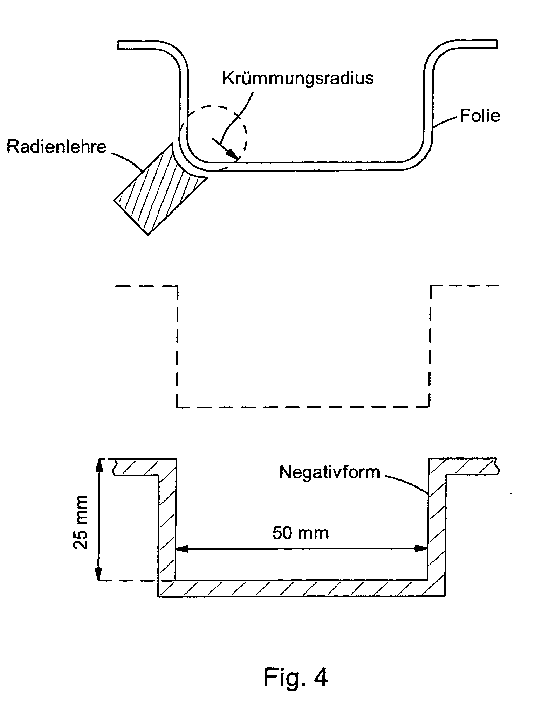

Nach dem Abkühlen wird die zu einem Becher thermogeformte Folienprobe entnommen und der Radius der Bodenkante, wie in Fig. 4 gezeigt vermessen. Die Messung erfolgt bevorzugt mittels fein abgestufter Radienlehren. Alternativ ist auch eine optische Vermessung geeignet, wobei die Kante mit einer Lichtquelle beleuchtet und über eine Linsenanordnung eine Vergrößerung des Kantenbildes um einen Faktor von beispielsweise 10:1 erreicht wird. Das Kantenbild wird über einen 45°-Spiegel horizontal auf eine transparente Radienschablone projiziert und der Radius abgelesen.

Zum Thermoformen der Folienprobe wird bevorzugt eine industrielle Anlage, beispielsweise vom Typ Multivac R240 eingesetzt.

Die Figuren 1 bis 3 zeigen den an den Vergleichs- und Erfindungsfolien gemessenen Kantenradius bei Thermoformtemperaturen im Bereich von 90 bis 150 °C (in Schritten von 10 °C). Die Thermoformbarkeit und damit der Kantenradius werden wesentlich durch die Foliendicke und -zusammensetzung beeinflusst. Um den Einfluss dieser beiden Merkmale zu entkoppeln, zeigt jede der Figuren 1 bis 3 die Messergebnisse an Folien der gleichen Dicke (150 µm, 300 µm, 500 und 550 µm). In den Figuren 1 bis 3 ist der Mengenanteil an Vinylacetat-Vinylchlörid-Copolymer mit "VC/VAC" bezeichnet.

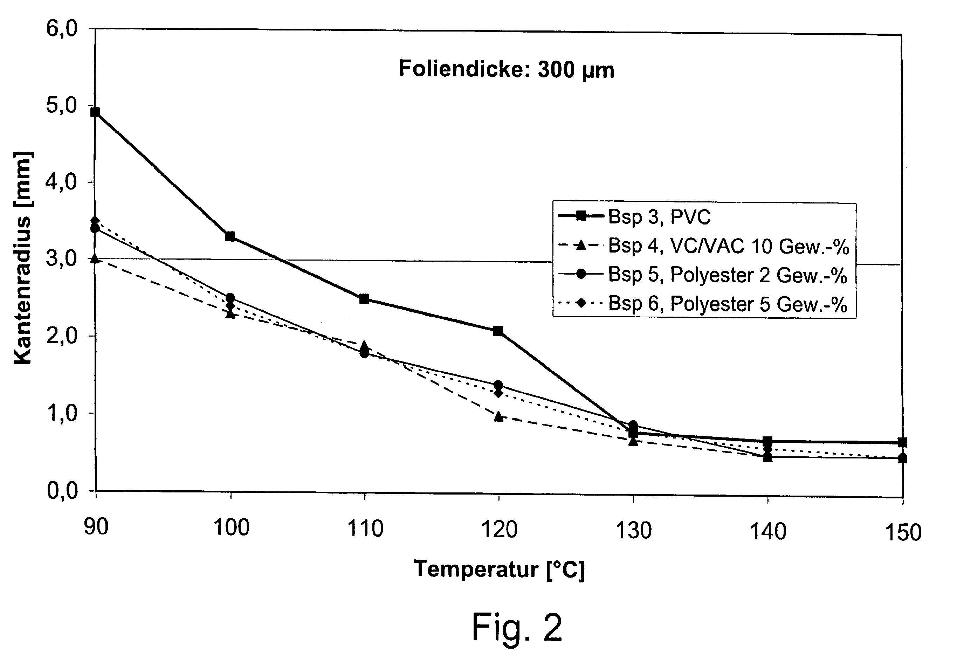

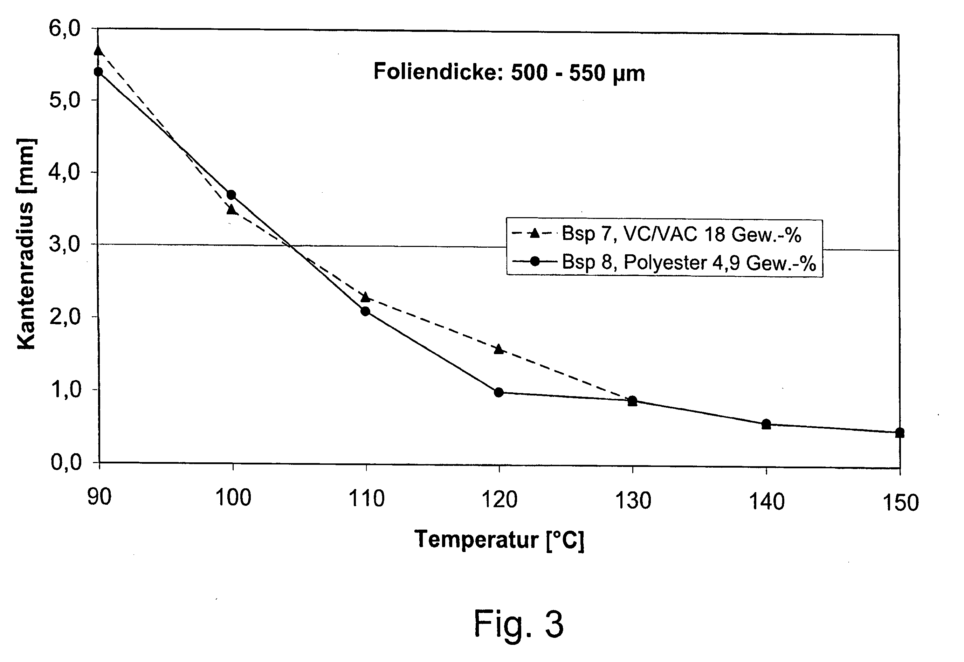

Aus den Figuren 2 und 3 ist zu entnehmen, dass durch Zugabe eines geringen Mengenanteils Polyester von weniger als 5 Gew.-% ein Kantenradius bzw. eine Thermoformbarkeit erzielt wird, die anderweitig nur mit der 2- bis 3-fachen Menge an Vinylacetat-Vinylchlorid-Copolymer zu erreichen ist.

An den Folien wurden zudem folgende Eigenschaften gemessen:
1. Die Dicke wurde in Anlehnung an DIN 53370 mittels eines Tastgeräts der Firma Mitutoyo, Japan, Typ 543/250 B bestimmt. Bei den Punktmessungen wurde die Folie zwischen den geöffneten Messflächen des Tastgerätes eingelegt, die dann anschließend stoßfrei geschlossen wurden. Die Dicke wurde von dem Tastgerät abgelesen.
2. Die Trübung bezeichnet den prozentualen Anteil des Streulichtes in Vorwärtsrichtung vom gesamten durch die Folie hindurchtretenden Lichtstromes. Die Messung der Trübung geschieht mit einer firmeneigenen Messgerätentwicklung, die eine Geometrie ähnlich der Geometrie des Messgerätes gemäß der Norm ASTMD-1003-61 aufweist.
3. Schlagzugzähigkeit: Die Messung erfolgt nach DIN EN ISO 8256 in Längs- und Querrichtung mittels eines Pendelschlagwerks. Hierbei wird die Folie durch einen einzigen Pendelschlag bis zum Bruch verstreckt. Die dabei verbrauchte Energie wird aus dem Energieverlust des Pendels bestimmt, wobei eine Korrektur für die Schleppzeigerreibung und die Schleuderarbeit vorgenommen wird.
4. Maßänderung in Querrichtung. Diese Messung wird nach DIN 53377 durchgeführt. Hierzu wird die Folie bei vorgegebener Temperatur von 75 °C und 95 °C im Wasserbad für 30 s gelagert. Die nach dieser Zeit eingetretene Maßänderung wird bei Raumtemperatur gemessen.
5. Thermostabilität: Eine zu untersuchende Mischung aus PVC, Additiven und anderen Polymeren wird an einem 2-Walzenstuhl mit definierten Parametern wie einer Walzenoberflächentemperatur von 185 °C, einer Knettemperatur von 180 °C, einer Walzengeschwindigkeit von Walze 1: 6,7 m/min und Walze 2: 6,9 m/min und einer Foliendicke von 400 µm ausgewalzt. Es wird in Abhängigkeit von der Zeit der Grad der Vergilbung, d.h. der thermische Abbau visuell beurteilt und qualitativ mit Werten von 1 bis 6 klassifiziert, wobei der Wert 1 einen geringen Abbau und der Wert 6 einen starken Abbau anzeigen. Zur Dokumentation können in kurzen Zeitabständen auch kleine Proben genommen und auf eine feste Unterlage aufgereiht werden. Nach der vorstehenden Methode durchgeführte Untersuchungen zeigen, dass erfindungsgemäße, Polyester enthaltenden VCP-Mischungen eine höhere Thermostabilität als konventionelle Mischungen, die lediglich Vinylchlorid/Vinylacetat Copolymer enthalten, aufweisen. Aufgrund der verbesserten Thermostabilität der erfindungsgemäßen VCP-Mischungen sind die bei konventionellen VCP-Mischungen zwingend erforderlichen komplexen Additivrezepturen durch einfache Additive ersetzbar.
6. Thermoformbereich: Der Thermoformbereich gibt an, in welchem Temperaturbereich sich eine Folie ohne Beeinträchtigung des visuellen Erscheinungsbildes verformen lässt. Innerhalb des Thermoformbereiches dürfen an einem Thermoformbecher mit einem Kantenradius von kleiner-gleich 7 mm keine visuell wahrnehmbaren Defekte wie Weißbruch oder Lochbildung auftreten. Gemäß einer werksinternen, vorstehend beschriebenen Vorschrift für die Messung des Kantenradius wird ein Becher unter definierten Bedingungen thermogeformt, wobei eine Folienprobe mit einer Abmessung von 200 mm x 200 mm und eine Becher-Negativform mit 150 mm Durchmesser und 100 mm Höhe verwendet werden. Die nach dieser Methode ermittelten Werte zur Thermoformbarkeit sind in Tabelle 2 wiedergegeben und zeigen, dass der erfindungsgemäße Einsatz von Polyester sich günstig auf das Thermoformverhalten der Folien auswirkt. Insbesondere ist Tabelle 2 zu entnehmen, dass der Thermoformbereich der erfindungsgemäßen Folien (Beispiele 5, 6, 8) vergleichbar ist mit dem Thermoformbereich der Folien der Vergleichsbeispiele (1, 4, 7).
7. Der K-Wert der Vinylchloridpolymerisate entspricht einer Kennzahl, die mit dem mittleren Polymerisationsgrad bzw. dem mittleren Molekulargewicht korreliert und in bekannter Weise eingestellt wird, indem die Polymerisation in einem vorgegebeben Temperaturbereich ausgeführt und/oder Polymerisierungsregler zugegeben werden. Der K-Wert des Vinylchloridpolymerisates wird nach DIN 53 726 bestimmt, wobei das Vinylchloridpolymerisat in Cyclohexanon gelöst wird.

Im Weiteren ist Tabelle 2 zu entnehmen, dass die erfindungsgemäße Folien (Beispiele 5) eine geringere Trübung als die Folien der Vergleichsbeispiele 1, 4 aufweisen. Im Weiteren haben die erfindungsgemäße Folien (Beispiele 5) eine höhere Schlagzugzähigkeit in Querrichtung als die VCNAC-Copolymer enthaltenden Folien der Vergleichsbeispiele 1, 4. Gleiches trifft auf die Folie des Vergleichsbeispiels 2 zu, die 15 Gew.-% Polyester enthält.

Der Mengenanteil des Polyesters in den erfindungsgemäßen Folien ist relativ gering im Vergleich zu dem Anteil an VC/VAC-Copolymer in den Vergleichsbeispielen. Bei der Folie des Beispiels 2 mit einem Mengenanteil von lediglich 15 Gew.-% Polyester ist die Maßänderung in Querrichtung bei 95 °C nahezu gleich zur Maßänderung der Folie des Beispiels 1, die als Fließhilfsmittel 35 Gew.-% VC/VAC-Copolymer enthält.

**Tabelle 1**

| **Versuchsnummer** | **1,3,4,7** | **2,5*,6,8*** |
|---|---|---|
| | **(Vergleichsbeispiele)** | **(*Erfindung)** |
| **PVC** | VINNOLIT S 3160 (Vinnolit) | VINNOLIT S 3160 (Vinnolit) |
| **Schlagzähmodifier** | KANE ACE B 580 (Kaneka) | KANE ACE B 580 (Kaneka) |
| **Prozesshilfsmittel** | Paraloid K175 (R & H) | Paraloid K120 N (R & H) |
| **Thermostabiliserung** | THERMOLITE 890F (Arkema) | THERMOLITE 890F (Arkema) |
| **Wachse und Gleitmittel** | Gemisch aus: | Gemisch aus: |
| | Ligalub 74 KE (Greven Fett Chemie) | Ligalub 74 KE (Greven Fett Chemie) |
| | Pisterene 4900 (Unichema) | Pisterene 4900 (Unichema) |
| **VC/VAC-Copolymer** | VINNOLIT S 3157/11 (Vinnolit) | VINNOLIT S 3157/11 (Vinnolit) |
| **Polyester** | --- | Cadence (Eastman) |

**Tabelle 2**

| **Versuchsnummer** | | **1** | **2** | **3** | **4** | **5*** | **6** | **7** | **8*** |
|---|---|---|---|---|---|---|---|---|---|
| **PVC** | [Gew.-%] | 53,3 | 73,3 | 88,9 | 78,9 | 86,8 | 83,8 | 73,5 | 85,5 |
| **Schlagzähmodifier** | [Gew.-%] | 7,0 | 7,0 | 7,5 | 7,5 | 7,5 | 7,5 | 5,5 | 5,5 |
| **Prozesshilfsmittel** | [Gew.-%] | 1,0 | 1,0 | 0,7 | 0,7 | 0,7 | 0,7 | 0,7 | 0,7 |
| **Thermostabiliserung** | [Gew.-%] | 1,5 | 1,5 | 1,2 | 1,2 | 1,2 | 1,2 | 1,2 | 1,2 |
| **Wachse und Gleitmittel** | [Gew.-%] | 2,2 | 2,2 | 1,8 | 1,8 | 1,8 | 1,8 | 1,1 | 1,1 |
| **VC/VAC-Copolymer** | [Gew.-%] | 35,0 | --- | --- | 10,0 | --- | --- | 18,0 | --- |
| **Polyester** | [Gew.-%] | --- | 15,0 | --- | --- | 2,0 | 5,0 | --- | 4,9 |
| **Foliendicke** | [µm] | 150 | 150 | 300 | 300 | 300 | 300 | 550 | 500 |
| **Kantenradius bei** | | | | | | | | | |
| **90°C** | [mm] | 2,1 | 2,3 | 4,9 | 3,0 | 3,4 | 3,5 | 5,7 | 5,4 |
| **100°C** | [mm] | 1,6 | 1,6 | 3,3 | 2,3 | 2,5 | 2,4 | 3,5 | 3,7 |
| **110°C** | [mm] | 1,4 | 1,5 | 2,5 | 1,9 | 1,8 | 1,8 | 2,3 | 2,1 |
| **120°C** | [mm] | 1,2 | 1,3 | 2,1 | 1,0 | 1,4 | 1,3 | 1,6 | 1,0 |
| **130°C** | [mm] | 0,9 | 1,0 | 0,8 | 0,7 | 0,9 | 0,8 | 0,9 | 0,9 |
| **140°C** | [mm] | 0,5 | 0,6 | 0,7 | 0,5 | 0,5 | 0,6 | 0,6 | 0,6 |
| **150°C** | [mm] | 0,5 | 0,5 | 0,7 | 0,5 | 0,5 | 0,5 | 0,5 | 0,5 |
| **Schlagzugzähigkeit quer** | [kJ/m²] | 240 | 280 | 230 | 200 | 230 | 250 | --- | --- |
| **Thermoformbereich** | [°C] | 89 - 105 | 92 - 106 | 89 - 98 | 86 - 104 | 86 - 102 | 84 - 110 | 80 - 100 | 84 - 102 |
| **Trübung** | [%] | 12 | 11 | 14 | 13 | 11 | 11 | --- | --- |
| **Verstreckte Folie (50 µm dick) 1 : 3 verstreckt in Querrichtung** | | | | | | | | | |
| **Maßänderung quer 75 °C** | [%] | - 36 | - 33 | --- | --- | --- | --- | --- | --- |
| **Maßänderung quer 95 °C** | [%] | - 60 | - 57 | --- | --- | --- | --- | --- | --- |

| | | | | | | | | | |
|---|---|---|---|---|---|---|---|---|---|
| **(* gemäß Erfindung)** | | | | | | | | | |

## Patentansprüche

1. Folie aus einer VCP-Mischung, umfassend 70 bis 97 Gew.-% eines oder mehrerer Vinylchloridpolymerisate mit K-Werten von 50 bis 90; 2 bis 25 Gew.-% Additive aus der Gruppe, umfassend Modifikatoren, hochmolekulare Polymere, Stabilisatoren, Wachse, Antiblockmittel, Farbmittel, Weichmacher, Prozesshilfsmittel und 0,1 bis kleiner 5 Gew.-% eines halbkristallinen oder amorphen Polyesters mit einer Kristallisationshalbwertzeit im geschmolzenen Zustand von mindestens 5 Minuten, wobei die Gewichtsanteile auf das Gesamtgewicht der VCP-Mischung bezogen sind, wobei die Folie in unverstrecktem Zustand eine Dicke von 30 µm bis 1200 µm aufweist.

2. Folie nach Anspruch 1, **dadurch gekennzeichnet, dass** sie in verstrecktem Zustand mit einem Streckgrad von 1,3 bis 4 eine Dicke von 20 µm bis 800 µm hat.

3. Folie nach Anspruch 2, **dadurch gekennzeichnet, dass** ihr Streckgrad zwischen 2 und 3 liegt.

4. Folie nach Anspruch 1, **dadurch gekennzeichnet, dass** ihre Dicke in verstrecktem Zustand 20 bis 200 µm beträgt.

5. Folie nach Anspruch 1, **dadurch gekennzeichnet, dass** ihr Kantenradius bei einer Temperatur von 100 °C im Bereich von 0,5 bis 4,0 mm liegt.

6. Folie nach Anspruch 1, **dadurch gekennzeichnet, dass** ihr Kantenradius bei einer Temperatur von 100 °C im Bereich von 1,4 bis 1,8 mm liegt.

7. Folie nach Anspruch 1, **dadurch gekennzeichnet, dass** die Maßänderung der verstreckten Folie durch Schrumpfen bei einer Temperatur von 75 °C in Streckrichtung 20 bis 70 % beträgt.

8. Folie nach Anspruch 1, **dadurch gekennzeichnet, dass** die Maßänderung der verstreckten Folie durch Schrumpfen bei einer Temperatur von 95 °C in Streckrichtung im Bereich von 45 bis 80 % liegt.

9. Folie nach den Ansprüchen 1 bis 8, **dadurch gekennzeichnet, dass** sie regenerierten, halbkristallinen oder amorphen Polyester enthält.

10. Verwendung der Folie gemäß einem der Ansprüche 1 bis 9, als thermoformbare und/oder schrumpfbare Folie.

11. Verwendung der Folie gemäß einem der Ansprüche 1 bis 9 als Verpackungs-, Schrumpf-, Möbel-, Wandbelags-, beschreibbare und bedruckbare Folie.

12. Verfahren zur Herstellung einer Folie und daraus thermogeformten Artikeln, umfassend die Schritte:
(a) Mischen eines oder mehrerer pulver-, pellet- oder granulatförmiger Vinylchloridpolymerisate mit einem K-Wert von 50 bis 90 und einem Anteil von 70 bis 97 Gew.-% mit Additiven aus der Gruppe, umfassend Modfikatoren, hochmolekulare Polymere, Stabilisatoren, Wachse, Antiblockmittel, Farbmittel, Weichmacher, Prozesshilfsmittel, mit einem Anteil von 2 bis 25 Gew.-% und einem halbkristallinen oder amorphen Polyester in Pulver-, Pellet- oder Granulatform mit einer Kristallisationshalbwertzeit im geschmolzenen Zustand von mindestens 5 min, mit einem Anteil von 0,1 bis kleiner 5 Gew.-%, wobei die Gewichtsanteile auf das Gesamtgewicht der gemischten Komponenten bezogen sind;
(b) Plastifizieren und Aufschmelzen der in Schritt (a) erhaltenen VCP-Mischung;
(c) Kalandrieren oder Extrudieren der aufgeschmolzenen VCP-Mischung bei Temperaturen von 150 bis 250 °C, um eine Folie zu formen; und
(d) Verstrecken und/oder Thermoformen der Folie in einem inline und/oder offline Prozess, wobei beim Verstrecken der Streckgrad zwischen 1,3 bis 4,0 in Längs- und/oder Querrichtung beträgt.

13. Verfahren nach Anspruch 12, **dadurch gekennzeichnet, dass** die Folie in Schritt (d) in einem inline und/oder offline Prozess verstreckt und/oder thermogeformt wird, wobei beim Verstrecken der Streckgrad zwischen 2,0 bis 3,0 in Längs- und/oder Querrichtung beträgt.

14. Verfahren nach Anspruch 12, **dadurch gekennzeichnet, dass** die mittlere Temperatur der Folie beim Verstrecken 70 bis 120 °C beträgt.

15. Verfahren nach Anspruch 12, **dadurch gekennzeichnet, dass** die mittlere Temperatur der Folie beim Verstrecken 100 °C beträgt.

16. Verfahren nach Anspruch 12, **dadurch gekennzeichnet, dass** die mittlere Temperatur der Folie beim Thermoformen 80 bis 150 °C beträgt.

17. Verfahren nach Anspruch 12, **dadurch gekennzeichnet, dass** die mittlere Temperatur der Folie beim Thermoformen 100 °C beträgt.

18. Verfahren nach Anspruch 12, **dadurch gekennzeichnet, dass** die VCP-Mischung in einem Gelieraggregat, auf einem Mischwalzwerk oder in einem Extruder auf etwa 130 bis 190 °C vorgeliert wird, um anschließend durch Kalandrieren zu der Folie geformt zu werden.

19. Verfahren nach Anspruch 12, **dadurch gekennzeichnet, dass** 70 bis 87 Gew.-% eines pulverförmigen Vinylchloridpolymerisats mit einem K-Wert von 50 bis 70; 0,1 bis kleiner 5 Gew.-% eines halbkristallinen oder amorphen Polyesters mit einer Kristallisationshalbwertszeit im geschmolzenen Zustand von mindestens 5 min in Pulver-, Pellet- oder Granulatform und 5 bis 25 Gew.-% Additive miteinander gemischt werden, wobei die Gewichtsanteile auf das Gesamtgewicht der erhaltenen VCP-Mischung bezogen sind, dass die VCP-Mischung plastifiziert und aufgeschmolzen und die aufgeschmolzene VCP-Mischung zu einer Folie kalandriert oder extrudiert wird.

20. Verfahren nach Anspruch 12, **dadurch gekennzeichnet, dass** für die VCP-Mischung ein Vinylchloridpolymerisat aus Vinylchlorid-Copolymer eingesetzt wird, das als Comonomer Ethylen, Propylen oder Vinylacetat mit einem Anteil von 1 bis 45 Gew.-% des Vinylchlorid-Copolymeren enthält.

## Claims

1. A film made of a VCP mixture, comprising from 70 to 97 % by weight of one or more vinyl chloride polymers with K values from 50 to 90; from 2 to 25 % by weight of additives from the group comprising modifiers, high-molecular-weight polymers, stabilizers, waxes, antiblocking agents, colorants, plasticizers, processing aids, and from 0.1 to less than 5 % by weight of a semicrystalline or amorphous polyester with a crystallization halflife time in the molten state of at least 5 minutes, where the proportions by weight are based on the total weight of the VCP mixture, where the thickness of the film in the unoriented state is from 30 µm to 1200 µm.

2. The film as claimed in claim 1, **characterized in that** its thickness in the oriented state with a degree of stretching of from 1.3 to 4 is from 20 µm to 800 µm.

3. The film as claimed in claim 2, **characterized in that** its degree of stretching is from 2 to 3.

4. The film as claimed in claim 1, **characterized in that** its thickness in oriented state is from 20 to 200 µm.

5. The film as claimed in claim 1, **characterized in that** its edge radius at a temperature of 100 °C is in the range from 0.5 to 4.0 mm.

6. The film as claimed in claim 1, **characterized in that** its edge radius at a temperature of 100 °C is in the range from 1.4 to 1.8 mm.

7. The film as claimed in claim 1, **characterized in that** the dimensional change of the oriented film through shrinkage at a temperature of 75 °C in the direction of stretching is from 20 to 70 %.

8. The film as claimed in claim 1, **characterized in that** the dimensional change of the oriented film through shrinkage at a temperature of 95 °C in the direction of stretching is in the range from 45 to 80 %.

9. The film as claimed in claims 1 to 8, **characterized in that** it comprises recycled, semicrystalline or amorphous polyester.

10. The use of the film as claimed in any of claims 1 to 9 as thermoformable and/or shrinkable film.

11. The use of the film as claimed in any of claims 1 to 9 as packaging film, shrink film, furniture film, wallcovering film, or inscribable and printable film.

12. A process for producing a film and thermoformed items therefrom, comprising the following steps:
(a) mixing a proportion of from 70 to 97 % by weight of one or more vinyl chloride polymers which take the form of powder, of pellets, or of granulated material and which have a K value of from 50 to 90 with a proportion of from 2 to 25 % by weight of additives from the group comprising modifiers, high-molecular-weight polymers, stabilizers, waxes, antiblocking agents, colorants, plasticizers, and processing aids, and a proportion of from 0.1 to less than 5 % by weight of a semicrystalline or amorphous polyester which takes the form of powder, of pellets, or of granulated material and which has a crystallization halflife time in the molten state of at least 5 min, where the proportions by weight are based on the total weight of the mixed components;
(b) plastifying and melting the VCP mixture obtained in step (a);
(c) calendering or extruding the molten VCP mixture at temperatures from 150 to 250 °C, in order to mold a film; and
(d) orienting and/or thermoforming the film in an inline and/or offline process, where the degree of stretching during the orientation process is from 1.3 to 4.0 longitudinally and/or transversely.

13. The process as claimed in claim 12, **characterized in that** the film in step (d) is thermoformed and/or oriented in an inline and/or offline process, where the degree of stretching during the orientation process is from 2.0 to 3.0 longitudinally and/or transversely.

14. The process as claimed in claim 12, **characterized in that** the average temperature of the film during the orientation process is from 70 to 120 °C.

15. The process as claimed in claim 12, **characterized in that** the average temperature of the film during the orientation process is 100 °C.

16. The process as claimed in claim 12, **characterized in that** the average temperature of the film during the thermoforming process is from 80 to 150 °C.

17. The process as claimed in claim 12, **characterized in that** the average temperature of the film during the thermoforming process is 100 °C.

18. The process as claimed in claim 12, **characterized in that** the VCP mixture is pregelled in a gelling assembly, on mixing rolls, or in an extruder to about 130 to 190 °C, in order then to be molded via calendering to give the film.

19. The process as claimed in claim 12, **characterized in that** from 70 to 87 % by weight of a vinyl chloride polymer which takes the form of powder and which has a K value of from 50 to 70; from 0.1 to less than 5 % by weight of a semicrystalline or amorphous polyester with a crystallization halflife time in the molten state of at least 5 min in the form of powder, of pellets, or of granulated material, and from 5 to 25 % by weight of additives are mixed with one another, where the proportions by weight are based on the total weight of the resultant VCP mixture, the VCP mixture is plastified and melted, and the molten VCP mixture is extruded or calendered to give a film.

20. The process as claimed in claim 12, **characterized in that** the VCP mixture uses a vinyl chloride polymer made of vinyl chloride copolymer which comprises, as comonomer, a proportion of from 1 to 45 % by weight, based on the vinyl chloride copolymer, of ethylene, propylene, or vinyl acetate.

## Revendications

1. Feuille composée d'un mélange VCP, comprenant de 70 à 90 % en poids d'un ou de plusieurs polymérisats de chlorure de vinyle à valeurs K de 50 à 90, de 2 à 25 % en poids d'additifs du groupe comprenant des modificateurs, des polymères à haut poids moléculaire, des stabilisateurs, des cires, des moyens antibloquants, des colorants, des plastifiants, des auxiliaires de traitement et de 0,1 à moins de 5 % en poids d'un polyester semi-cristallin ou amorphe ayant une demi-vie de cristallisation à l'état fondu d'au moins de 5 minutes, les pourcentages en poids étant donnés par rapport au poids total du mélange VCP, la feuille présentant à l'état non étiré une épaisseur de 30 µm à 1200 µm.

2. Feuille selon la revendication 1, **caractérisée en ce qu'**elle a, à l'état étiré, à un degré d'étirement de 1,3 à 4, une épaisseur de 20 µm à 800 µm.

3. Feuille selon la revendication 2, **caractérisée en ce que** son degré d'étirement se situe entre 2 et 3.

4. Feuille selon la revendication 1, **caractérisée en ce que** son épaisseur à l'état étiré est de 20 à 200 µm.

5. Feuille selon la revendication 1, **caractérisée en ce que** son rayon de bord est à une température de 100° C de l'ordre de 0,5 à 4,0 mm.

6. Feuille selon la revendication 1, **caractérisée en ce que** son rayon de bord est à une température de 100° C de l'ordre de 1,4 à 1,8 mm.

7. Feuille selon la revendication 1, **caractérisée en ce que** le changement de dimension de la feuille étirée par rétraction à une température de 75° C est de 20 à 70 % dans la direction d'étirement.

8. Feuille selon la revendication 1, **caractérisée en ce que** le changement de dimension de la feuille étirée par rétraction à une température de 75° C est de 45 à 80 % dans la direction d'étirement.

9. Feuille selon les revendications 1 à 8, **caractérisée en ce qu'**elle contient du polyester régénéré, semi-cristallin ou amorphe.

10. Utilisation de la feuille selon l'une quelconque des revendications 1 à 9, comme feuille thermoformable et/ou rétractable.

11. Utilisation de la feuille selon l'une quelconque des revendications 1 à 9, comme feuille d'emballage, feuille rétractable, feuille pour meuble, feuille de revêtement de paroi, feuille inscriptible et imprimable.

12. Procédé de fabrication d'une feuille et d'articles thermoformés à partir de celle-ci, comprenant les étapes :
(a) mélanger un ou plusieurs polymérisats de chlorure de vinyle sous forme de poudre, de pellets ou de granulés ayant une valeur K de 50 à 90 et dans une proportion de 70 à 97 % en poids avec des additifs du groupe comprenant des modificateurs, des polymères à haut poids moléculaire, des stabilisateurs, des cires, des agents antibloquants, des colorants, des plastifiants, des auxiliaires de traitement, dans une proportion de 2 à 25 % en poids et avec un polyester semi-cristallin ou amorphe sous forme de poudre, de pellets ou de granulés ayant une demi-vie de cristalisation à l'état fondu d'au moins 5 min., dans une proportion de 0,1 à moins de 5 % en poids, les pourcentages en poids étant donnés par rapport au poids total des composants mélangés ;
(b) plastifier et fondre le mélange VCP obtenu à l'étape (a) ;
(c) calandrer ou extruder le mélange VCP fondu à des températures de 150 à 250° C pour former une feuille ; et
(d) étirer et/ou thermoformer la feuille dans un processus en ligne et/ou hors ligne, le taux d'étirement lors de l'étirement se situant entre 1,3 et 4,0 dans la direction longitudinale et/ou la direction transversale.

13. Procédé selon la revendication 12, **caractérisé en ce que** la feuille à l'étape (d) est étirée et/ou thermoformée dans un processus en ligne et/ou hors ligne, le degré d'étirement lors de l'étirement se situant entre 2,0 et 3,0 dans la direction longitudinale et/ou la direction transversale.

14. Procédé selon la revendication 12, **caractérisé en ce que** la température moyenne de la feuille lors de l'étirement est de 70 à 120° C.

15. Procédé selon la revendication 12, **caractérisé en ce que** la température moyenne de la feuille lors de l'étirement est de 100° C.

16. Procédé selon la revendication 12, **caractérisé en ce que** la température moyenne de la feuille lors du thermoformage est de 80 à 150° C.

17. Procédé selon la revendication 12, **caractérisé en ce que** la température moyenne de la feuille lors du thermoformage est de 100° C.

18. Procédé selon la revendication 12, **caractérisé en ce que** le mélange VCP est prégélifié dans une unité de gélification, sur un laminoir pour produits composites ou dans une extrudeuse à environ 130 à 190° C pour être ensuite formé en feuille par calandrage.

19. Procédé selon la revendication 12, **caractérisé en ce que** 70 à 87 % en poids d'un polymérisat de chlorure de vinyle sous forme de poudre ayant une valeur K de 50 à 70, 0,1 à moins de 5 % en poids d'un polyester semi-cristallin ou amorphe ayant une demi-vie de cristallisation à l'état fondu d'au moins de 5 min sous forme de poudre, de pellets ou de granulés et 5 à 25 % en poids d'additifs sont mélangés ensemble, les pourcentages en poids étant donnés par rapport au poids total du mélange VCP obtenu, **en ce que** le mélange VCP est plastifié et fondu et le mélange VCP fondu est calandré ou extrudé en une feuille.

20. Procédé selon la revendication 12, **caractérisé en ce qu'**on utilise pour le mélange VCP, un polymérisat de chlorure de vinyle composé de copolymère de chlorure de vinyle qui contient comme comonomère de l'éthylène, du propylène ou de l'acétate de vinyle dans une proportion de 1 à 45 % en poids du copolymère de chlorure de vinyle.
